# EUROPÄISCHE PATENTSCHRIFT

(11) **EP 3 841 688 B1**
(45) Veröffentlichungstag und Bekanntmachung des Hinweises auf die Patenterteilung: **09.08.2023**
(21) Anmeldenummer: 19755904.0
(22) Anmeldetag: 19.08.2019
(51) Int. Cl.: H04B 10/50, G02B 6/42, H01R 31/06, H04L 12/40, H04B 10/40

(54) **MEDIENKONVERTER UND VERFAHREN ZUM BETREIBEN EINES MEDIENKONVERTERS**
MEDIA CONVERTER AND METHOD FOR OPERATING A MEDIA CONVERTER
CONVERTISSEUR DE MÉDIA ET PROCÉDÉ DE FONCTIONNEMENT D'UN CONVERTISSEUR DE MÉDIA

(30) Priorität: 23.08.2018 DE 102018120541
(43) Veröffentlichungstag der Anmeldung: 30.06.2021
(73) Patentinhaber: Eaton Intelligent Power Limited, Dublin 4 (IE)
(72) Erfinder: BLASCHKE, Erik, 10713 Berlin (DE); HANSING, Matthias, 53604 Bad Honnef (DE); HELLER, Franz, 53757 Sankt Augustin (DE)
(74) Vertreter: Epping - Hermann - Fischer
(86) Internationale Anmeldenummer: PCT/EP2019/072102
(87) Internationale Veröffentlichungsnummer: WO 2020/038867

(56) Entgegenhaltungen:
- EP-A1- 1 261 159
- WO-A1-2007/021728
- CN-Y- 2 282 226
- DE-A1-102010 006 711
- US-A1- 2007 086 789

## Beschreibung

Die vorliegende Offenbarung betrifft einen Medienkonverter, eine Busanordnung mit dem Medienkonverter und ein Verfahren zum Betreiben eines Medienkonverters.

Der Medienkonverter bzw. die Busanordnung können auf dem Gebiet der Automatisierungstechnik eingesetzt werden. Sie können in der industriellen Buskommunikation verwendet werden. Eine Busanordnung kann beispielsweise einen ersten elektrischen Bus, einen optischen Bus und einen zweiten elektrischen Bus aufweisen. Somit werden ein Medienkonverter zwischen dem ersten elektrischen Bus und dem optischen Bus und ein weiterer Medienkonverter zwischen dem optischen Bus und dem zweiten elektrischen Bus angeordnet. Ein Medienkonverter wandelt ein elektrisches Signal in ein optisches Signal und umgekehrt um.

Die Busanordnung umfasst typisch auch einen Koordinator, der an den ersten elektrischen Bus angeschlossen ist, und mehrere Teilnehmer, die beispielsweise an den ersten oder den zweiten elektrischen Bus angeschlossen sind. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein.

Dokument US 2007/0086789 A1 beschreibt eine Chirp-Signal Schaltung und ein optisches Übertragungssystem. Ein Treiber generiert aus einem Modulationssignal und einem Chirp-Signal ein Signal, das einem Phasenmodulator eines optischen Wellenleiters zugeleitet wird. Der Treiber umfasst einen Logikinverter, der das Modulationssignal als Ausgangssignal ohne Inversion bereitstellt, wenn das Chirp-Signal einen logischen Wert 0 aufweist, und das Modulationssignal als Ausgangssignal mit Logikinversion bereitstellt, wenn das Chirp-Signal einen logischen Wert 1 aufweist.

Dokument EP 1261159 A1 befasst sich mit Wellenlängenmultiplexen in optischen Systemen. Informationen tragende Signale werden über elektrisch-optische Konverter einem Multiplexer und zusätzlich über Inverter und elektrisch-optische Konverter dem Multiplexer zugeleitet.

Dokument DE 102010006711 A1 gibt ein System zur optischen Datenübertragung an. Ein Medienkonverter ist mit einer Schnittstelle für einen elektrischen Datenbus verbunden. Im Medienkonverter ist ein Wandler angeordnet, der einen elektrischen Datenstrom in einen optischen Datenstrom bzw. einen optischen Datenstrom in einen elektrischen Datenstrom wandelt. Der Medienkonverter weist ein Mittel zum Ein- oder Auskoppeln eines Diagnose- und Steuerdatenstroms auf, der dem Wandler über eine Schnittstelle zuführbar ist, so dass Werte von physikalischen Zustandsgrößen von einem Bauteil des Wandlers erfassbar sind und die zugehörige Information im Diagnose- und Steuerdatenstrom dem Datenstrom im Medienkonverter zuleitbar ist.

Dokument WO 2007/021728 A1 erläutert eine Verbindungseinheit mit einer ersten und einer zweiten Schnittstelle, um physikalisch ein erstes und eine zweites Kommunikationsmedium anzuschließen. Die Verbindungseinheit koppelt das erste und das zweite Kommunikationsmedium kommunikativ und verarbeitet Managementdaten, die über das erste und/oder das zweite Kommunikationsmedium kommuniziert worden sind.

Eine Aufgabe der vorliegenden Erfindung ist es, einen Medienkonverter und ein Verfahren zum Betreiben eines Medienkonverters bereitzustellen, der ein Steuersignal empfangen und weitergeben kann.

Die Aufgabe wird mit den Gegenständen der unabhängigen Patentansprüche gelöst. Weiterbildungen und Ausgestaltungen sind jeweils Gegenstand der abhängigen Ansprüche.

Die oben angegebenen Merkmale gelten auch für die folgende Beschreibung soweit nichts anderes angegeben.

In einer Ausführungsform umfasst ein Medienkonverter einen elektrischen Busanschluss zum Anschließen eines ersten elektrischen Busses und einen optischen Busanschluss zum Anschließen eines optischen Busses. Der Medienkonverter ist ausgelegt, ein elektrisches Signal des ersten elektrischen Busses derart in ein optisches Signal des optischen Busses zu übertragen, dass bei einem ersten Wert eines internen Steuersignals des Medienkonverters das optische Signal dem elektrischen Signal entspricht und bei einem zweiten Wert des internen Steuersignals das optische Signal eine dem elektrischen Signal entsprechende invertierte Form aufweist.

Mit Vorteil kann der Medienkonverter sowohl aus einem empfangenen elektrischen Signal wie auch aus einem internen Steuersignal ein einziges optisches Signal generieren. Somit ist eine einzige optische Verbindung wie etwa ein einziges Glasfaserkabel ausreichend, um sowohl das elektrische Signal wie auch das interne Steuersignal zu übertragen. Der Medienkonverter kann z.B. als Repeater bezeichnet sein. Mit Vorteil kann eine Enumerationsinformation über einen Lichtwellenleiter übermittelt werden. Die Enumerationsinformation kann zur initialen Adressierung der Teilnehmer am Bus genutzt werden.

In der Erfindung ist der Medienkonverter ausgelegt, in einer Sendephase, während der sich das interne Steuersignal vom ersten Wert zum zweiten Wert ändert, das optische Signal so abzugeben, dass das optische Signal bis zum Ende der Sendephase dem elektrischen Signal entspricht. Entspricht das optische Signal dem elektrischen Signal, so ist das optische Signal nicht invertiert gegenüber dem elektrischen Signal. Mit Vorteil wird das optische Signal entweder während der gesamten Dauer der Sendephase invertiert oder während der gesamten Dauer der Sendephase nicht-invertiert übertragen.

In einer Ausführungsform ist der Medienkonverter ausgelegt, nach einer Änderung des internen Steuersignals vom ersten Wert zum zweiten Wert einen Wert des optischen Signals in einer Ruhephase zu ändern und in einer auf die Ruhephase folgenden weiteren Sendephase das optische Signal gegenüber dem elektrischen Signal zu invertieren.

Der Medienkonverter gibt das optische Signal verzögert gegenüber dem elektrischen Signal ab, z.B. aufgrund einer internen Verarbeitungsdauer des Medienkonverters. Die Verzögerung kann z.B. die Länge eines Pulses oder eine halbe Taktphase oder ein ganzzahliges Vielfaches davon sein.

Eine Sendephase umfasst eine Datenübertragungsphase. Die Sendephase kann auch eine Synchronisationsphase umfassen, auf die die Datenübertragungsphase folgt. Zwischen zwei Sendephasen ist eine Ruhephase.

In einer Ausführungsform weist der elektrische Busanschluss des Medienkonverters zwei elektrische Leitungen auf, die an zwei elektrische Busleitungen des ersten elektrischen Busses angeschlossen sind. Die Anzahl der elektrischen Busleitungen des ersten elektrischen Busses kann exakt zwei sein.

In einer Ausführungsform umfasst eine Busanordnung den Medienkonverter, den optischen Bus und einen weiteren Medienkonverter. Der weitere Medienkonverter umfasst einen elektrischen Busanschluss zum Anschließen eines zweiten elektrischen Busses und einen optischen Busanschluss zum Anschließen des optischen Busses. Der weitere Medienkonverter überträgt das optische Signal des optischen Busses in ein weiteres elektrisches Signal des zweiten elektrischen Busses.

In einer Ausführungsform sind der Medienkonverter, der weitere Medienkonverter und der optische Bus zur bidirektionalen optischen Datenübertragung ausgelegt.

In einer Ausführungsform weist der optische Busanschluss des Medienkonverters einen optischen Anschluss auf, der an eine erste optische Leitung des optischen Busses angeschlossen ist. Die Anzahl der optischen Leitungen des optischen Busses kann z.B. exakt eins sein. Die erste optische Leitung kann z.B. bidirektional genutzt sein, d.h. eine Übertragung eines optischen Signals in beide Richtungen ermöglichen.

In einer Ausführungsform weist der optische Busanschluss des Medienkonverters zwei optische Anschlüsse auf, die an eine erste und eine zweite optische Leitung des optischen Busses angeschlossen sind. Die Anzahl der optischen Leitungen des optischen Busses kann exakt zwei sein. Die erste optische Leitung des optischen Busses leitet das optische Signal vom Medienkonverter an den weiteren Medienkonverter. Die zweite optische Leitung des optischen Busses leitet ein optisches Signal vom weiteren Medienkonverter an den Medienkonverter. Somit erzielt der optische Bus eine bidirektionale Übertragung, das heißt eine Übertragung optischer Signale in beide Richtungen.

Die Anzahl der optischen Leitungen des optischen Busses kann weniger als drei sein. Die Busanordnung kann frei von einer elektrischen Leitung sein, die den Medienkonverter mit dem weiteren Medienkonverter verbindet.

In einer Ausführungsform generiert der weitere Medienkonverter das weitere elektrische Signal und ein Steuereingangssignal aus dem optischen Signal.

In einer Ausführungsform erkennt der weitere Medienkonverter, ob er das optische Signal in invertierter Form empfängt. Er ändert den Wert des Steuereingangssignals von einem ersten Wert in einen zweiten Wert im Fall, dass der weitere Medienkonverter erkannt hat, dass er das optische Signal in invertierter Form empfängt. Erkennt der weitere Medienkonverter, dass er das optische Signal in nicht-invertierter Form empfängt, so generiert der weitere Medienkonverter das Steuereingangssignal mit dem ersten Wert.

Der Medienkonverter umfasst einen ersten elektrischen Steueranschluss, der z.B. auch als Steuereingang oder Steuersignaleingang bezeichnet werden kann.

Der Medienkonverter kann als passiver Medienkonverter oder als aktiver Medienkonverter realisiert sein.

In einer Ausführungsform ist der Medienkonverter als passiver Medienkonverter oder als aktiver Medienkonverter einstellbar. Die Einstellung des Medienkonverters kann durch Auswerten einer Schalterstellung eines Schalters des Medienkonverters oder durch Empfangen eines Befehls von einem Koordinator über das elektrische Signal erfolgen. Der Schalter kann in Hardware realisiert sein.

In einer Ausführungsform ist der Medienkonverter (z.B. als passiver Medienkonverter) konfiguriert, ein Steuersignal am ersten elektrischen Steueranschluss abzugreifen und das interne Steuersignal aus dem Steuersignal zu generieren. Alternativ ist der Medienkonverter (z.B. als aktiver Medienkonverter) konfiguriert, das interne Steuersignal als Funktion des elektrischen Signals des ersten elektrischen Busses zu generieren, d.h. aufgrund eines mit dem elektrischen Signal übermittelten Befehls das interne Steuersignal zu generieren. Die Konfigurierung kann einstellbar sein, wie oben näher erläutert.

Der weitere Medienkonverter kann als passiver Medienkonverter oder als aktiver Medienkonverter realisiert sein.

In einer Ausführungsform ist der weitere Medienkonverter als passiver Medienkonverter oder als aktiver Medienkonverter einstellbar. Die Einstellung des weiteren Medienkonverters kann durch Auswerten einer Schalterstellung eines Schalters des weiteren Medienkonverters oder durch Empfangen eines Befehls von dem Koordinator über das optische Signal erfolgen.

In einer Ausführungsform kann z.B. einem aktiven Medienkonverter eine Adresse vom Koordinator zugewiesen werden. Ein passiver Medienkonverter kann z.B. frei von einer vom Koordinator zugewiesenen Adresse sein. Ein passiver Medienkonverter ist "unsichtbar" und verbraucht keine Adresse im Adressraum, ein aktiver Medienkonverter ist "sichtbar".

In einer Ausführungsform ist das Steuereingangssignal ein internes Signal im weiteren Medienkonverter. Das Steuereingangssignal kann z.B. zum Aktivieren des weiteren Medienkonverters dienen. Ist der weitere Medienkonverter aktiviert, so kann er z.B. den von einem Koordinator der Busanordnung gesandten Daten seine Adresse entnehmen. In diesem Fall ist der weitere Medienkonverter als aktiver Medienkonverter realisiert oder eingestellt. Da zu jedem beliebigen Zeitpunkt ausschließlich höchstens ein Teilnehmer oder Medienkonverter aktiviert ist, übernimmt genau dieser Teilnehmer oder Medienkonverter diese Adresse. Dies ermöglicht die Zuweisung einer Adresse an den Teilnehmer oder Medienkonverter.

Alternativ gibt der weitere Medienkonverter das Steuereingangssignal als externes Signal ab, z.B. an einen Teilnehmer des zweiten Busses, auch als weiterer Teilnehmer bezeichnet. Das Steuereingangssignal kann z.B. ein weiteres Steuersignal sein, das der weitere Medienkonverter an den weiteren Teilnehmer abgibt, so dass der weitere Teilnehmer aktiviert ist und eine Adresse aus dem weiteren elektrischen Signal übernimmt. In diesem Fall kann der weitere Medienkonverter als passiver Medienkonverter realisiert oder eingestellt sein.

In einer Ausführungsform erkennt der weitere Medienkonverter, ob er das optische Signal in invertierter Form empfängt, und gibt das weitere elektrische Signal derart an den zweiten elektrischen Bus ab, dass das weitere elektrische Signal gegenüber dem optischen Signal invertiert wird im Fall, dass der weitere Medienkonverter erkannt hat, dass er das optische Signal in invertierter Form empfängt. Erkennt der weitere Medienkonverter, dass er das optische Signal in nicht-invertierter Form empfängt, so invertiert er das weitere elektrische Signal gegenüber dem optischen Signal nicht. Das weitere elektrische Signal kann die gleiche Form wie das elektrische Signal unabhängig vom Wert des internen Steuersignals haben. Insbesondere ist das weitere elektrische Signal nicht gegenüber dem elektrischen Signal invertiert. Der weitere Medienkonverter gibt z.B. das weitere elektrische Signal verzögert gegenüber dem optischen Signal ab, etwa aufgrund einer internen Verarbeitungsdauer des weiteren Medienkonverters.

In einer Ausführungsform umfasst die Busanordnung einen Koordinator, der über den ersten elektrischen Bus mit dem elektrischen Busanschluss des Medienkonverters gekoppelt ist. Der Koordinator ist z.B. ausgelegt, den Wert des Steuersignals zu setzen. Der Koordinator umfasst einen elektrischen Steueranschluss, der auch als Steuerausgang oder Steuersignalausgang bezeichnet werden kann. Der elektrische Steueranschluss des Koordinators kann beispielsweise über eine Steuerleitung direkt an den ersten elektrischen Steueranschluss des Medienkonverters angeschlossen sein. Dies kann z.B. der Fall sein, wenn sich kein Teilnehmer zwischen dem Koordinator und dem Medienkonverter am ersten elektrischen Bus befindet. Der Koordinator kann z.B. über die Steuerleitung das Steuersignal dem Medienkonverter zuleiten.

In einer Ausführungsform kann der Koordinator über das elektrische Signal dem Medienkonverter den Befehl geben, das interne Steuersignal zu generieren, also etwa das interne Steuersignal vom ersten auf den zweiten Wert zu setzen (etwa bei einem aktiven Medienkonverter).

In einer Ausführungsform umfasst die Busanordnung einen ersten Teilnehmer, der über den ersten elektrischen Bus mit dem Koordinator gekoppelt ist und einen zweiten elektrischen Steueranschluss umfasst, der über eine Steuerleitung direkt an den ersten elektrischen Steueranschluss des Medienkonverters angeschlossen ist. Der Koordinator kann z.B. über das elektrische Signal einen Befehl dem ersten Teilnehmer geben, dass dieser über die Steuerleitung das Steuersignal dem Medienkonverter zuleitet. Weiter umfasst der erste Teilnehmer einen ersten elektrischen Steueranschluss, der auch als Steuereingang oder Steuersignaleingang realisiert sein kann. Der zweite elektrische Steueranschluss kann als Steuerausgang oder Steuersignalausgang realisiert sein.

Wird dem Medienkonverter das Steuersignal zugeleitet, so wird der Medienkonverter (der etwa als aktiver Medienkonverter realisiert sein kann) aktiviert und übernimmt anschließend seine Adresse dem elektrischen Signal, oder der Medienkonverter (der etwa als passiver Medienkonverter realisiert sein kann) generiert das interne Steuersignal, also setzt das interne Steuersignal etwa vom ersten Wert auf den zweiten Wert.

Zwischen dem Koordinator und dem Teilnehmer kann mindestens ein zusätzlicher Teilnehmer am ersten elektrischen Bus angeordnet sein. Der Steueranschluss des Koordinators ist über eine Steuerleitung mit dem ersten Steueranschluss des mindestens einen zusätzlichen Teilnehmers gekoppelt. Der zweite Steueranschluss des mindestens einen zusätzlichen Teilnehmers ist über eine Steuerleitung mit dem ersten Steueranschluss des ersten Teilnehmers gekoppelt. Der zweite Steueranschluss des ersten Teilnehmers ist direkt über die Steuerleitung an den ersten Steueranschluss des Medienkonverters angeschlossen. Somit sind der Koordinator, der mindestens eine zusätzliche Teilnehmer, der erste Teilnehmer und der Medienkonverter als eine Daisy Chain verknüpft.

In einer Ausführungsform umfasst die Busanordnung mindestens einen weiteren Teilnehmer, der über den zweiten elektrischen Bus an den weiteren Medienkonverter angeschlossen ist.

Die Busanordnung kann in verschiedenen Ausführungsformen realisiert sein, je nachdem ob z.B. der Medienkonverter und der weitere Medienkonverter als aktive oder passive Medienkonverter realisiert oder eingestellt sind.

In einer Ausführungsform erhält der Medienkonverter an seinem ersten elektrischen Steueranschluss das Steuersignal mit dem zweiten Wert und invertiert das optische Signal gegenüber dem elektrischen Signal. Das Steuersignal wird dabei vom ersten Teilnehmer oder, falls dieser nicht vorhanden ist, vom Koordinator über die Steuerleitung an den ersten elektrischen Steueranschluss des Medienkonverters abgegeben. Der weitere Medienkonverter erkennt, dass er das optische Signal in invertierter Form empfängt, und ändert den Wert des Steuereingangssignals vom ersten Wert in den zweiten Wert. Der weitere Medienkonverter gibt das Steuereingangssignal als weiteres Steuersignal an einen elektrischen Steueranschluss des am zweiten elektrischen Bus angeschlossenen weiteren Teilnehmers. Der weitere Teilnehmer wird durch das weitere Steuersignal aktiviert und übernimmt seine Adresse aus dem weiteren elektrischen Signal. Hierbei sind der Medienkonverter und der weitere Medienkonverter passiv realisiert oder eingestellt. Sie weisen keine eigenen Adressen auf. Sie dienen der Übermittlung des am ersten elektrischen Steueranschluss des Medienkonverters empfangenen Steuersignals an den am zweiten elektrischen Bus angeschlossenen weiteren Teilnehmer.

In einer alternativen Ausführungsform erhält der Medienkonverter an seinem ersten elektrischen Steueranschluss ein Signal z.B. mit dem zweiten Wert, wird dadurch aktiviert und übernimmt seine Adresse aus dem elektrischen Signal. Anschließend sendet der Koordinator über das elektrische Signal den Befehl an den Medienkonverter, das interne Steuersignal zu generieren, so dass der Medienkonverter das optische Signal gegenüber dem elektrischen Signal invertiert. Der weitere Medienkonverter erkennt, dass er das optische Signal in invertierter Form empfängt, und ändert den Wert des Steuereingangssignals vom ersten Wert auf den zweiten Wert. Der weitere Medienkonverter wird durch das Steuereingangssignal aktiviert und übernimmt seine Adresse aus dem optischen Signal.

Anschließend sendet der Koordinator über das elektrische und das optische Signal den Befehl an den weiteren Medienkonverter, das weitere Steuersignal zu generieren und an den ersten elektrischen Steueranschluss des am zweiten elektrischen Bus angeschlossenen weiteren Teilnehmers abzugeben. Der weitere Teilnehmer wird durch das weitere Steuersignal aktiviert und übernimmt seine Adresse aus dem weiteren elektrischen Signal. Hierbei sind der Medienkonverter und der weitere Medienkonverter aktiv realisiert oder eingestellt. Sie weisen eigenen Adressen auf. Der Medienkonverter, der weitere Medienkonverter und der weitere Teilnehmer werden in verschiedenen aufeinanderfolgenden Sendephasen aktiviert.

In alternativen Ausführungsformen sind der Medienkonverter aktiv und der weitere Medienkonverter passiv realisiert oder eingestellt bzw. der Medienkonverter passiv und der weitere Medienkonverter aktiv realisiert oder eingestellt. Entsprechend können Varianten der oben geschilderten Verfahren durchgeführt werden.

In einer Ausführungsform umfasst ein Verfahren zum Betreiben eines Medienkonverters folgende Schritte: Erzeugen eines internen Steuersignals durch den Medienkonverter, Empfangen eines elektrischen Signals durch den Medienkonverter von einem ersten elektrischen Bus und Abgeben einen optischen Signals durch den Medienkonverter an einen optischen Bus. Der Medienkonverter gibt das optische Signal derart ab, dass bei einem ersten Wert des internen Steuersignals das optische Signal dem elektrischen Signal entspricht und bei einem zweiten Wert des internen Steuersignals das optische Signal gegenüber dem elektrischen Signal invertiert ist.

Das Steuersignal kann vom Medienkonverter z.B. an einem ersten elektrischen Steueranschluss des Medienkonverters, etwa in einer Sendephase, empfangen werden und als Funktion des Steuersignals das interne Steuersignal gesetzt werden. Alternativ kann das interne Steuersignal vom Medienkonverter z.B. mittels eines Befehls im elektrischen Signal, etwa in der Sendephase, gesetzt werden. Auf die Sendephase folgt eine weitere Sendephase, in der bei einem zweiten Wert des internen Steuersignals das optische Signal gegenüber dem elektrischen Signal invertiert wird.

Mit Vorteil gibt das vom Medienkonverter abgegebene optische Signal sowohl die Information, die im elektrischen Signal enthalten ist, wie auch die Information, die im internen Steuersignal enthalten ist, wieder. Somit ist eine einzige optische Verbindung wie etwa ein einziges Glasfaserkabel ausreichend.

Das Verfahren zum Betreiben eines Medienkonverters kann z.B. mit dem Medienkonverter und/oder der Busanordnung gemäß einer der oben beschriebenen Ausführungsformen realisiert werden.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:
Figuren 1 und 2 Beispiele einer Busanordnung und
Figur 3 ein Beispiel für Signale einer Busanordnung.

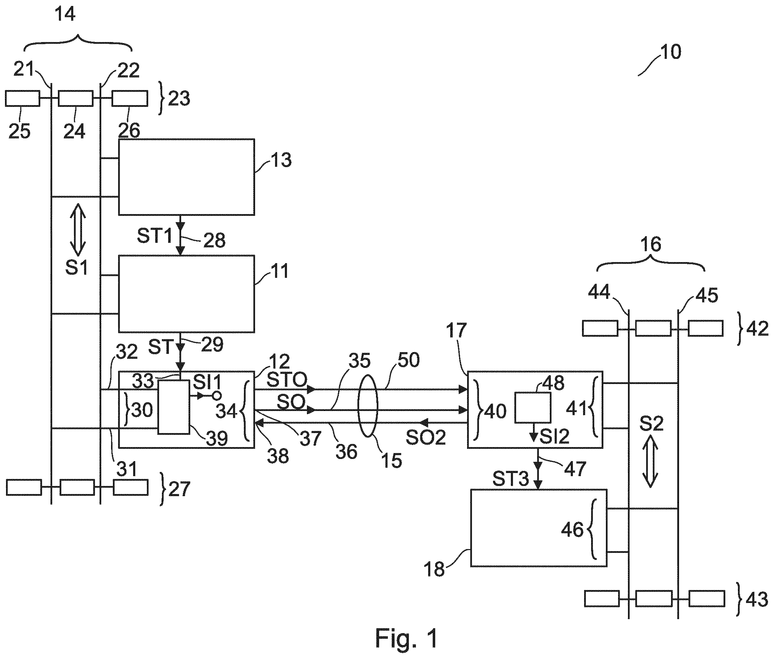

Figur 1 zeigt ein Beispiel für eine Busanordnung 10. Die Busanordnung 10 umfasst einen ersten Teilnehmer 11, einen Medienkonverter 12 und einen Koordinator 13. Der Medienkonverter 12 kann z.B. als Repeater implementiert sein. Der erste Teilnehmer 11 kann als Knoten (englisch node) realisiert sein. Weiter umfasst die Busanordnung 10 einen ersten elektrischen Bus 14, an den der Koordinator 13, der erste Teilnehmer 11 und der Medienkonverter 12 angeschlossen sind. Der erste elektrische Bus 14 kann auch als K-Bus bezeichnet sein. Zusätzlich umfasst die Busanordnung 10 einen optischen Bus 15, der an den Medienkonverter 12 angeschlossen ist. Der optische Bus 15 kann auch als N-Bus bezeichnet sein. Da die beiden Busse 14 und 15 als K-Bus und N-Bus bezeichnet werden können, kann der Medienkonverter 12 auch als Repeater K-N bezeichnet werden.

Ferner umfasst die Busanordnung 10 einen weiteren Medienkonverter 17, der an den optischen Bus 15 angeschlossen ist. Der zweite elektrische Bus 16 kann als L-Bus bezeichnet sein. Der weitere Medienkonverter 17 kann z.B. als Repeater realisiert sein, insbesondere als Repeater N-L (da er den N-Bus mit dem L-Bus koppelt). An den weiteren Medienkonverter 17 ist ein zweiter elektrischer Bus 16 der Busanordnung 10 angeschlossen. Die Kombination aus dem Medienkonverter 12 und dem weiteren Medienkonverter 17 kann auch also Repeater K-L bezeichnet werden. Auf diese Weise wird eine galvanische Trennung zwischen den Bussen K und L, hier zwischen dem ersten elektrischen Bus 14 und dem zweiten elektrischen Bus 16, erreicht. Die Busanordnung 10 umfasst einen weiteren Teilnehmer 18, der an den zweiten elektrischen Bus 16 angeschlossen ist. Somit ist der Koordinator 13 über den ersten elektrischen Bus 14 mit dem ersten Teilnehmer 11 und dem Medienkonverter 12 sowie über den ersten elektrischen Bus 14 und den optischen Bus 15 mit dem weiteren Medienkonverter 17 und schließlich über den ersten elektrischen Bus 14, den optischen Bus 15 und den zweiten elektrischen Bus 16 mit dem weiteren Teilnehmer 18 gekoppelt.

Der erste elektrische Bus 14 weist eine erste und eine zweite elektrische Busleitung 21, 22 auf. Zusätzlich kann der erste elektrische Bus 14 eine Abschlussanordnung 23 an einem Ende des ersten elektrischen Busses 14 aufweisen. Die Abschlussanordnung 23 kann beispielsweise einen ersten bis dritten Widerstand 24 bis 26 aufweisen. Ein erster Widerstand 24 verbindet die erste elektrische Busleitung 21 mit der zweiten elektrischen Busleitung 22. Ein zweiter Widerstand 25 verbindet die erste elektrische Busleitung 21 mit einem Bezugspotentialanschluss oder einem Versorgungsspannungsanschluss. Entsprechend verbindet ein dritter Widerstand 26 die zweite elektrische Busleitung 22 mit dem Bezugspotentialanschluss oder dem Versorgungsspannungsanschluss.

Der erste elektrische Bus 14 kann eine weitere Abschlussanordnung 27 aufweisen, der wie die Abschlussanordnung 23 realisiert ist. Der erste und der zweite elektrische Bus 14, 16 weisen einen festen Ruhezustand (englisch: fixed idle state) auf. Der optische Bus 15 hat einen variablen Ruhezustand (englisch: variable idle state), da das optische Signal SO sowohl invertiert als auch nicht invertiert übertragen werden können muss. Der erste und der zweite elektrische Bus 14, 16 können z.B. gemäß dem Schnittstellen-Standard TIA/EIA-485 A, auch EIA-485 oder RS-485 bezeichnet, betrieben werden.

Der Koordinator 13 ist über eine erste Steuerleitung 28 mit dem ersten Teilnehmer 11 verbunden. Weiter ist der erste Teilnehmer 11 über eine Steuerleitung 29 mit dem Medienkonverter 12 verbunden.

Der Medienkonverter 12 umfasst einen elektrischen Busanschluss 30, der an den ersten elektrischen Bus 14 angeschlossen ist. Dazu weist der erste Busanschluss 30 eine erste und eine zweite Anschlussleitung 31, 32, Pin oder Terminal auf, die an die erste und die zweite elektrische Busleitung 21, 22 angeschlossen sind. Ferner umfasst der Medienkonverter 12 einen ersten elektrischen Steueranschluss 33, der an die Steuerleitung 29 angeschlossen ist. Zusätzlich umfasst der Medienkonverter 12 einen optischen Busanschluss 37, der an den optischen Bus 15 angeschlossen ist. Weiter umfasst der Medienkonverter 12 eine Kontrolleinheit 39. Die Kontrolleinheit 39 ist eingangsseitig an den ersten elektrischen Steueranschluss 33 angeschlossen. Die Kontrolleinheit 39 ist - z.B. bidirektional - mit dem elektrischen Busanschluss 30 verbunden. Weiter ist die Kontrolleinheit 39 mit dem optischen Busanschluss 34 - z.B. bidirektional - gekoppelt.

Der optische Bus 15 umfasst eine erste und eine zweite optische Leitung 35, 36. Der optische Busanschluss 34 weist einen ersten und einen zweiten optischer Anschluss 37, 38 auf, die an die erste und an die zweite optische Leitung 35, 36 angeschlossen sind. Die erste und die zweite optische Leitung 35, 36 können beispielsweise als Lichtwellenleiter oder Glasfaser, wie eine Monomode-Faser oder eine Multimode-Faser, realisiert sein. Die erste und die zweite optische Leitung 35, 36 koppeln den optische Busanschluss 34 des Medienkonverters 12 mit einem optischen Busanschluss 40 des weiteren Medienkonverters 17. Der erste und der zweite optische Anschluss 37, 38 können als optischer Stecker hergestellt sein.

Der weitere Medienkonverter 17 hat einen elektrischen Busanschluss 41, der an den zweiten elektrischen Bus 16 angeschlossen ist. Der zweite elektrische Bus 16 kann wie der erste elektrische Bus 14 realisiert sein. Der zweite elektrische Bus 16 kann beispielsweise an einem Ende eine Abschlussanordnung 42 aufweisen, die wie die Abschlussanordnung 23 realisiert ist. Entsprechend kann der zweite elektrische Bus 16 an einem weiteren Ende eine zusätzliche Abschlussanordnung 43 aufweisen, die wie die Abschlussanordnung 23 realisiert ist.

Der zweite elektrische Bus 16 umfasst eine dritte und eine vierte elektrische Busleitung 44, 45. Der elektrische Busanschluss 41 des weiteren Medienkonverters 17 umfasst zwei Leitungen, Pins oder Terminals, die an die dritte und die vierte elektrische Busleitung 44, 45 angeschlossen sind. Der weitere Teilnehmer 18 umfasst ebenfalls einen elektrischen Busanschluss 46, der an den zweiten elektrischen Bus 16 angeschlossen ist. Eine weitere Steuerleitung 47 schließt den weiteren Medienkonverter 17 an den weiteren Teilnehmer 18 an. Der weitere Teilnehmer 18 kann auch z.B. als Knoten (englisch node) implementiert sein.

Der optische Bus 15 umfasst eine optische Steuerleitung 50, die den Medienkonverter 12 mit dem weiteren Medienkonverter 17 koppelt. Der optische Busanschluss 34 des Medienkonverters 12 ist somit über die optische Steuerleitung 50 mit dem optischen Busanschluss 40 des weiteren Medienkonverters 17 gekoppelt. Somit kann der Medienkonverter 12 ausgangsseitig über die optische Steuerleitung 50 an den weiteren Medienkonverters 17 angeschlossen sein.

Ein elektrisches Signal S1 liegt am ersten elektrischen Bus 14 an. Das elektrische Signal S1 wird dem elektrischen Busanschluss 30 des Medienkonverters 12 zugeleitet. Das elektrische Signal S1 wird beispielsweise vom Koordinator 13 oder vom ersten Teilnehmer 11 abgegeben. Ein Steuersignal ST liegt am ersten elektrischen Steueranschluss 33 des Medienkonverters 12 an. Der erste Teilnehmer 11 gibt das Steuersignal ST an den ersten elektrischen Steueranschluss 33 des Medienkonverters 12 ab. Das Steuersignal ST ist als elektrisches Signal realisiert. Weiter gibt der Koordinator 13 ein erstes Steuersignal ST1 an den ersten Teilnehmer 11 ab.

Der Medienkonverter 12 generiert ein optisches Signal SO als Funktion des elektrischen Signals S1 und gibt das optische Signal SO über den optischen Bus 15 an den weiteren Medienkonverter 17 ab. Das optische Signal SO wird z.B. über die erste optische Leitung 35 vom Medienkonverter 12 an den weiteren Medienkonverter 17 abgegeben. Ein weiteres optisches Signal SO2 kann über die zweite optische Leitung 36 vom weiteren Medienkonverter 17 an den Medienkonverter 12 abgegeben werden. Die erste optische Leitung 35 kann z.B. als Hinleitung und die zweite optische Leitung 36 als Rückleitung realisiert sein. Zusätzlich gibt der Medienkonverter 12 über die optische Steuerleitung 50 ein optisches Steuersignal STO an den weiteren Medienkonverter 17 ab. Der Medienkonverter 12 generiert ein internes Steuersignal SI1.

Der weitere Medienkonverter 17 generiert ein weiteres elektrisches Signal S2 in Abhängigkeit vom optischen Signal SO und gibt das weitere elektrische Signal S2 an den zweiten elektrischen Bus 16 ab. Der zweite elektrische Bus 16 leitet das weitere elektrische Signal S2 an den weiteren Teilnehmer 18. Der weitere Medienkonverter 17 generiert ein Steuereingangssignal SI2 aus dem optischen Steuersignal STO. Der weitere Medienkonverter 17 gibt ein weiteres Steuersignal ST3 an den weiteren Teilnehmer 18 ab.

Somit kann der Koordinator durch das erste Steuersignal ST1 über die erste Steuerleitung 28 den ersten Teilnehmer 11 aktivieren, etwa in einer vorausgehenden Sendephase.

Der erste Teilnehmer 11 kann durch das Steuersignal ST über die Steuerleitung 29 den Medienkonverter 12 aktivieren, etwa in einer Sendephase, die auf die vorausgehende Sendephase folgt. Dazu gibt z.B. in der Sendephase der Koordinator 13 einen Befehl durch das elektrische Signal S1 an den ersten Teilnehmer 11, dass der erste Teilnehmer 11 das Steuersignal ST generiert, etwa in Form eines Übergangs von einem ersten Wert W1 auf einen zweiten Wert W2 oder eines Pulses oder mehrerer Pulse.

Der Medienkonverter 12 kann durch das optische Steuersignal STO über die optische Steuerleitung 50 den weiteren Medienkonverter 17 aktivieren, etwa in einer weiteren Sendephase, die auf die Sendephase folgt. Dazu gibt z.B. in der weiteren Sendephase der Koordinator 13 einen Befehl durch das elektrische Signal S1 an den Medienkonverter 12, dass der Medienkonverter 12 das interne Steuersignal SI1 generiert und anschließend das optische Steuersignal STO generiert. Die Kontrolleinheit 39 ändert das interne Steuersignal SI1 von einem ersten Wert W1 auf einen zweiten Wert W2. Das optische Steuersignal STO kann dem internen Steuersignal SI1 entsprechen. Die Kontrolleinheit 39 kann eine Speicherzelle zur Speicherung des internen Steuersignals SI1 aufweisen.

Schließlich kann der weitere Medienkonverter 17 durch Abgeben des weiteren Steuersignals ST3 über die weitere Steuerleitung 47 den weiteren Teilnehmer 18 aktivieren, etwa in einer nachfolgenden Sendephase. Dazu gibt z.B. in der nachfolgenden Sendephase der Koordinator 13 einen Befehl durch das elektrische Signal S1 und das optische Signal SO an den weiteren Medienkonverter 17, so dass der weitere Medienkonverter 17 das weitere Steuersignal ST3 generiert.

Für das oben geschilderte Verfahren sind der Medienkonverter 12 und der weitere Medienkonverter 17 als aktive Medienkonverter realisiert oder eingestellt.

Alternativ kann der erste Teilnehmer 11 durch das Steuersignal ST über die Steuerleitung 29, den Medienkonverter 12, den optischen Bus 15, den weiteren Medienkonverter 17 und die weitere Steuerleitung 47 den weiteren Teilnehmer 18 aktivieren. Dabei sind der Medienkonverter 12 und der weitere Medienkonverter 17 als passive Medienkonverter realisiert oder eingestellt.

Es ist gleichzeitig höchstens ein Modul aus der Menge der Teilnehmer 11, 18 und der Medienkonverter 12, 17 aktiviert. Ein aktivierter Teilnehmer 11, 18 oder Medienkonverter 12, 17 entnimmt seine Adresse dem anliegenden elektrischen Signal S1, S2 bzw. optischen Signal SO. Somit ist sichergestellt, dass ein Adressenwert ausschließlich an ein Modul vergeben wird.

Mit Vorteil kann über den optischen Bus 15 der Koordinator 13 auch weit entfernt liegende Teilnehmer wie den weiteren Teilnehmer 18 ansprechen. Der optische Bus 15 ermöglicht eine Übertragung und Daten ohne Störung durch elektromagnetische Wellen. Mit Vorteil kann der optische Bus 15 auch in Räumen und Einrichtungen verlegt werden, in denen aus Sicherheitsgründen elektrische Leitungen nicht verlegt werden können. Mit Vorteil ermöglicht der optische Bus 15 eine energiesparende Datenübertragung über größere Entfernungen. Mit Vorteil wird eine galvanische Trennung zwischen dem ersten elektrischen Bus 14 und dem zweiten elektrischen Bus 16 erreicht.

Die Busanordnung 10, auch Bussystem genannt, ist dazu ausgelegt, Busteilnehmer 11, 18 mittels einer separaten Steuerleitung 28, 29, 47 zu enumerieren, um die Position der Teilnehmer 11, 18 am Bus zu bestimmen. Bei einem Übergang auf ein optisches Medium ist dafür eine weitere Signalleitung bzw. Steuerleitung erforderlich. Die weitere Steuerleitung ist z.B. als optische Steuerleitung 50 realisiert.

In einer weiteren, nicht gezeigten Ausführungsform ist an dem zweiten elektrischen Bus 16 ein zusätzlicher Medienkonverter (z.B. ein zusätzlicher Repeater) angeschlossen. Auf diese Weise ist auch eine Kaskadierung von galvanisch getrennten Bussegmenten möglich.

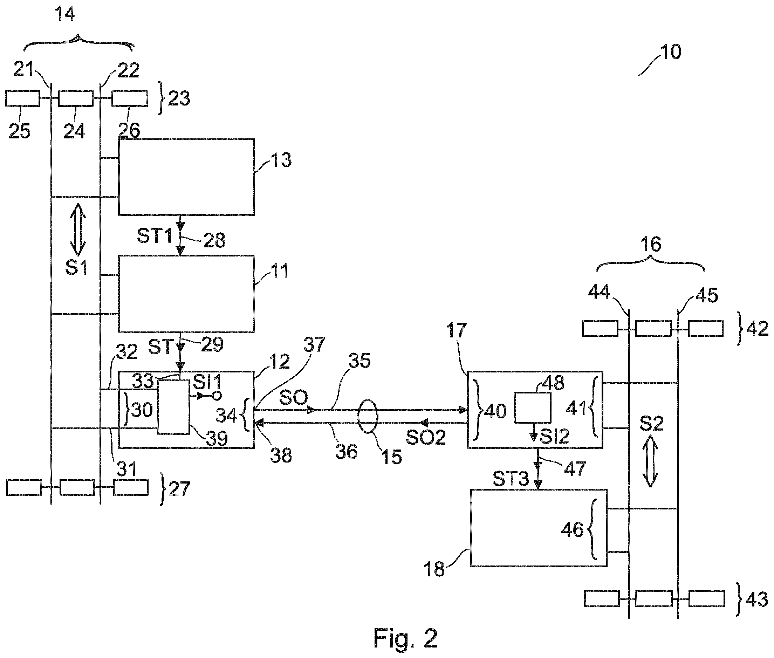

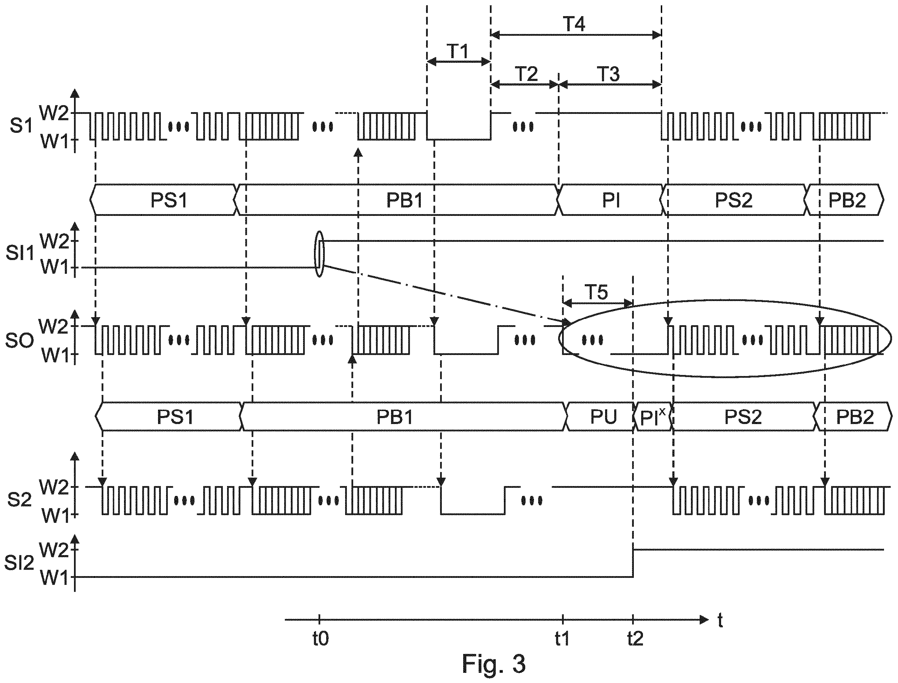

Figur 2 zeigt ein weiteres Beispiel für eine Busanordnung 10, die eine Weiterbildung der in Figur 1 gezeigten Busanordnung ist. in Figur 2 ist die optische Steuerleitung 50 weggelassen. Somit umfasst der optische Bus 15 ausschließlich die erste und die zweite optische Leitung 35, 36. Die Anzahl der optischen Leitungen 35, 36 des optischen Busses 15 ist exakt zwei. Das optische Signal SO ist eine Funktion des elektrischen Signals S1 sowie des internen Steuersignals SI1, wie in Figur 3 näher erläutert. Der weitere Medienkonverter 17 generiert das Steuereingangssignal SI2 und das weitere elektrische Signal S2 aus dem optischen Signal SO. Dazu umfasst der weitere Medienkonverter 17 eine Kontrolleinheit 48, wie eine Logikschaltung, einen Mikroprozessor oder einen Mikrocontroller.

Mit Vorteil umfasst der optische Bus 15 somit ausschließlich zwei optische Übertragungsleitungen 35, 36 und kann damit mit geringerem Aufwand realisiert werden. Die optische Steuerleitung 50 wird vorteilhafterweise weggelassen.

Figur 3 zeigt ein Beispiel für Signale, die in der Busanordnung 10 gemäß Figur 2 auftreten können. In Figur 3 werden das elektrische Signal S1, Phasen im Medienkonverter 12, das interne Steuersignal SI1, das optische Signal SO, Phasen im weiteren Medienkonverter 17, das weitere elektrische Signal S2 und das Steuereingangssignal SI2 in Abhängigkeit von einer Zeit t gezeigt. Der Koordinator 13 gibt das elektrische Signal S1 an den ersten elektrischen Bus 14 ab. Das elektrische Signal S1 weist zuerst regelmäßige Taktimpulse auf, die zur Synchronisation des Medienkonverters 12 mit dem elektrischen Signal S1 während einer Synchronisationsphase PS1 dienen.

Das elektrische Signal S1 weist nach den regelmäßigen Taktimpulsen Pulse auf, welche Daten enthalten. Somit folgt nach der Synchronisationsphase PS1 eine Datenübertragungsphase PB1. Die Daten werden in Bytes übertragen. Am Ende der Datenübertragungsphase PB1 weist das elektrische Signal 1 einen ersten Wert W1 während einer ersten Zeitdauer T1 auf und anschließend einen zweiten Wert W2 während einer zweiten Zeitdauer T2. Alternativ kann auch die Phase mit der ersten Zeitdauer T1 weggelassen sein. Eine Leerlaufphase oder Untätigkeitsphase (englisch idle time) kann die zweite Zeitdauer T2 aufweisen. Nach dem Ende der Leerlaufphase mit der zweiten Zeitdauer T2 ist die Datenübertragungsphase PB1 im Medienkonverter 12 abgeschlossen. Die Synchronisationsphase PS1 und die Datenübertragungsphase PB1 bilden eine Sendephase.

Der erste Wert W1 kann auch als erster logischer Wert bezeichnet werden. Der zweite Wert W2 kann auch als zweiter logischer Wert bezeichnet werden. Der erste Wert W1 kann 0 sein und der zweite Wert W2 kann 1 sein, wie in Figur 3 dargestellt. Alternativ kann der erste Wert W1 1 sein und der zweite Wert W2 0 sein. Der erste Wert W1 kann bei einigen der Signale S1, SO, ST, SI1, SI2 0 sein und bei anderen der Signale S1, SO, ST, SI1, SI2 1 sein.

Nach der Datenübertragungsphase PB1 folgt eine Ruhephase PI des Medienkonverters 12. Die Ruhephase PI dauert eine dritte Zeitdauer T3. Die Summe aus der zweiten Zeitdauer T2 und der dritten Zeitdauer T3 ergibt die Dauer T4 einer Lücke zwischen den Rahmen, englisch inter-frame gap.

Die Ruhephase PI des Medienkonverters 12 wird durch Pulse des elektrischen Signals S1 beendet. Die regelmäßigen Pulse des elektrischen Signals S1 dienen wiederum der Synchronisation des Medienkonverters 12 mit dem elektrischen Signal S1, so dass sich der Medienkonverter 12 in einer weiteren Synchronisationsphase PS2 befindet. Auf die weitere Synchronisationsphase PS2 folgt eine weitere Datenübertragungsphase PB2. Die weitere Synchronisationsphase PS2 und die weitere Datenübertragungsphase PB2 bilden eine weitere Sendephase. Das elektrische Signal S1 in der weiteren Synchronisationsphase PS2 ist identisch mit dem elektrischen Signal S1 in der Synchronisationsphase PS1. Zu Beginn der Synchronisationsphasen PS1, PS2 geht das elektrische Signal S1 vom zweiten Wert W2 auf den ersten Wert W1 über.

Gemäß Figur 3 generiert der Medienkonverter 12 das interne Steuersignal SI1 während der Datenübertragungsphase PB1. Das interne Steuersignal ST wird von der Kontrolleinheit 39 des Medienkonverters 12 abgegeben. Das heißt, während der Datenübertragungsphase PB1 hat das interne Steuersignal SI1 einen Übergang vom ersten Wert W1 auf den zweiten Wert W2. Das interne Steuersignal SI1 bleibt auf dem zweiten Wert W2 auch während der folgenden Ruhephase PI. Der Medienkonverter 12 kann z.B. passiv realisiert oder eingestellt sein. In diesem Fall generiert die Kontrolleinheit 39 das interne Steuersignal SI1 aus dem am Steueranschluss 33 des Medienkonverters anliegenden Steuersignal ST.

Alternativ entnimmt der Medienkonverter 12 dem elektrischen Signal S1 während der Datenübertragungsphase PB1 den Befehl, das interne Steuersignal SI1 zu generieren. Der Medienkonverter 12 kann z.B. aktiv realisiert oder eingestellt sein.

Das interne Steuersignal SI1 kann in beiden Fällen ein intern im Medienkonverter 12 vorliegendes Signal sein. Das interne Steuersignal SI1 kann ein Merker oder eine Markierung, englisch flag, sein.

Die Beschreibung der Figur 3 kann beispielhaft für den Fall, dass das interne Steuersignal SI1 aus dem vom ersten Teilnehmer 11 zugeführten Steuersignal ST generiert wird, und für den Fall, dass das interne Steuersignal SI1 auf Grund eines vom Medienkonverter 12 dem elektrischen Signal S1 entnommenen Befehls generiert wird, sein.

Der Medienkonverter 12 generiert das optische Signal SO als Funktion des elektrischen Signals S1. Während der Synchronisationsphase PS1 und der Datenübertragungsphase PB1 entspricht das optische Signal SO dem elektrischen Signal S1. Das bedeutet, dass das optische Signal SO die gleichen Informationen überträgt wie das elektrische Signal S1. In dem hier gezeigten Ausführungsbeispiel startet das optische Signal SO zu Beginn der Synchronisationsphase PS1 von einem zweiten Wert W2 und geht vom zweiten Wert W2 auf einen ersten Wert W1 über. In der Datenübertragungsphase PB1 weist das optische Signal SO für die optionale erste Zeitdauer T1 den ersten Wert W1 und für die zweite Zeitdauer T2 den zweiten Wert W2 auf. Dabei sind die Übergänge vom optischen Signal SO gegenüber dem elektrischen Signal S1 zeitlich verschoben (beispielsweise um einen Puls oder um die Hälfte einer Taktphase, oder um ein ganzzahliges Vielfaches davon).

Da das interne Steuersignal SI1 während der Datenübertragungsphase PB1 vom ersten Wert W1 auf den zweiten Wert W2 übergeht, gibt am Ende der Datenübertragungsphase PB1, nämlich am Ende der Leerlaufphase mit der zweiten Zeitdauer T2, in Figur 3 als t1 bezeichnet, der Medienkonverter 12 das optische Signal SO mit dem ersten Wert W1 ab. Das heißt, am ersten Zeitpunkt t1 geht das optische Signal SO vom zweiten Wert W2 auf den ersten Wert W1 über. Somit ist in der Ruhephase PI das optische Signal SO gegenüber dem elektrischen Signal S1 invertiert. Der Übergang im internen Steuersignal SI1 triggert somit am Ende der Datenübertragungsphase PB1 einen Übergang im optischen Signal SO, nämlich hier im Beispiel vom zweiten Wert W2 auf den ersten Wert W1. Erfolgt kein Übergang im internen Steuersignal SI1, bleibt am Ende der Datenübertragungsphase PB1 und in der folgenden Ruhephase PI das optische Signal SO konstant. Das Signal SO bleibt invertiert bis nach dem nächsten Wechsel des internen Steuersignals SI1.

Während der weiteren Synchronisationsphase PS2 in Figur 3 startet das optische Signal SO vom ersten Wert W1 und geht auf den zweiten Wert W2 über im Unterschied zum elektrischen Signal S1 in der weiteren Synchronisationsphase PS2 und zum optischen Signal SO in der Synchronisationsphase PS1. Somit ist das optische Signal SO während der weiteren Synchronisationsphase PS2 gegenüber dem optischen Signal SO während der Synchronisationsphase PS1 invertiert. Während der weiteren Synchronisationsphase PS2 und der folgenden weiteren Datenübertragungsphase PB2 ist das optische Signal SO gegenüber dem elektrischen Signal S1 invertiert.

Der weitere Medienkonverter 17 gibt das weitere elektrische Signal S2 ab. Während der Synchronisationsphase PS1 des weiteren Medienkonverters 17 ist das weitere elektrische Signal S2 identisch mit dem elektrischen Signal S1, abgesehen von einer Zeitverzögerung (die z.B. zwei Pulse oder eine Taktphase umfasst). Auch das weitere elektrische Signal S2 startet vom zweiten Wert W2 und geht zu Beginn der Synchronisationsphase PS1 auf den ersten Wert W1 über. Am Ende der Datenübertragungsphase PB1 hat das weitere elektrische Signal S2 zuerst für die optionale erste Zeitdauer T1 den ersten Wert W1 und anschließend für die zweite Zeitdauer T2 den zweiten Wert W2. Das weitere elektrische Signal S2 ändert seinen Wert am Ende der Datenübertragungsphase PB1 nicht. Im Unterschied zum optischen Signal SO bleibt das weitere elektrische Signal S2 konstant auf dem zweiten Wert W2 am Ende der Datenübertragungsphase PB1 und der folgende Ruhephase PI.

Nach dem Übergang im optischen Signal SO zu Ende der Datenübertragungsphase PB1 vom zweiten Wert W2 auf den ersten Wert W1 ist der weitere Medienkonverter 17 in einer Zwischenphase PU während einer fünften Zeitdauer T5. Die fünfte Zeitdauer T5 kann gleich lang wie die zweite Zeitdauer T2 sein, aber auch länger oder kürzer als die zweite Zeitdauer T2. Die Zwischenphase PU kann eine weitere Leerlaufphase sein. Die fünfte Zeitdauer T5 kann wie die zweite Zeitdauer T2 einen vorbestimmten Wert aufweisen. Die Ruhephase PI umfasst auch die Zwischenphase PU.

Der weitere Medienkonverter 17 erkennt an der Pulsform im optischen Signal SO, dass das interne Steuersignal SI1 den zweiten Wert W2 aufweist. Das optische Signal SO hat nämlich am Ende der Datenübertragungsphase PB1 den ersten Wert W1, dann für die zweite Zeitdauer T2 den zweiten Wert W2 und anschließend für die fünfte Zeitdauer T5 den ersten Wert W1. Somit weist das optische Signal SO einen Puls aus den Werten 010 auf. Nach dem Ende der fünften Zeitdauer T5 zu einem zweiten Zeitpunkt t2 setzt der weitere Medienkonverter 17 einen Puls im Steuereingangssignal SI2. Würde hingegen das optische Signal SO nach dem Ende der Datenübertragungsphase PB1 kurze Pulse enthalten, so würde der weitere Medienkonverter dies als Beginn der weiteren Synchronisationsphase PS2 erkennen und keine Änderung des Steuereingangssignals SI2 durchführen. Zu dem zweiten Zeitpunkt t2 hat das Steuereingangssignal SI2 einen Übergang vom ersten Wert W1 auf den zweiten Wert W2. Somit hat der weitere Medienkonverter 17 detektiert, dass der Medienkonverter 12 in der vorangehenden Datenübertragungsphase PB1 den Puls im internen Steuersignal SI1 gesetzt hat. Das optische Signal SO in der weiteren Sendephase ist somit eine Funktion des in der Sendephase generierten internen Steuersignals SI1 und des elektrischen Signals S1 in der weiteren Sendephase.

In einer Vorphase PI* kann z.B. die Busanordnung 10 untätig (englisch idle) sein. Der weitere Medienkonverter 17 gibt nach der Vorphase PI* das weitere elektrische Signal S2 derart ab, dass es einen Übergang vom zweiten Wert W2 auf den ersten Wert W1 aufweist. Somit generiert der weitere Medienkonverter 17 das weitere elektrische Signal S2 durch Invertierung des optischen Signals SO. Das weitere elektrische Signal S2 entspricht somit in der weiteren Synchronisationsphase PS2 und der darauffolgenden weiteren Datenübertragungsphase PB2 dem elektrischen Signal S1. Mit Vorteil wird durch die Übertragung des internen Steuersignals SI1 zu Generierung des Steuereingangssignals SI2 keine Veränderung der Signalform im weiteren elektrischen Signal S2 gegenüber der Signalform im elektrischen Signal S1 erzeugt, mit Ausnahme einer Zeitverschiebung. Das Steuersignal ST, das interne Steuersignal SI1 und das Steuereingangssignal SI2 sind Einzelbit-Signale.

Der weitere Medienkonverter 17 kann das Steuereingangssignal SI2 als weiteres Steuersignal ST3 an den weiteren Teilnehmer 18 abgeben und ihn dadurch aktivieren. Der so aktivierte weitere Teilnehmer 18 kann dann dem weiteren elektrischen Signal S2 seine Adresse entnehmen. In diesem Fall kann der weitere Medienkonverter 17 als passiver Medienkonverter realisiert oder eingestellt sein.

Alternativ kann der weitere Medienkonverter 17 durch das Steuereingangssignal SI2 aktiviert sein. Der so aktivierte weitere Medienkonverter 17 kann dem optischen Signal SO seine Adresse entnehmen. In diesem Fall kann der weitere Medienkonverter 17 als aktiver Medienkonverter realisiert oder eingestellt sein.

Bei der Übertragung von Daten über das optische Medium wird die Pause zwischen zwei Datentelegrammen genutzt, um die Polarität der Daten zu invertieren. Diese Invertierung wird durch den weiteren Medienkonverter 17 erkannt und als Einzelbit-Signal SI2 ausgewertet. Der weitere Medienkonverter 17 hat die Funktion eines Empfängers. Er kann auch die Funktion eines Senders übernehmen und Daten z.B. des weiteren Teilnehmers 18 an den Koordinator 13 übertragen. Mit Vorteil wird eine weitere Steuerleitung (die optische Steuerleitung 50) neben der optischen Übertragungsstrecke für die Nutzdaten eingespart.

Bleibt das interne Steuersignal SI1 auf dem ersten Wert W1 in der Datenübertragungsphase PB1, so invertiert der Medienkonverter 12 das optische Signal SO in Bezug auf das elektrische Signal S1 nicht. In diesem Fall bleibt das Steuereingangssignal SI2 auf dem ersten Wert W1 und der weitere Medienkonverter 17 generiert das weitere elektrische Signal S2 ohne Invertierung aus dem optischen Signal SO.

In einer alternativen, nicht gezeigten Ausführungsform umfasst die Busanordnung 10 keinen ersten Teilnehmer 11. Der Koordinator 13 ist direkt über die Steuerleitung 29 an den ersten elektrischen Steueranschluss 33 des Medienkonverters 12 angeschlossen. In diesem Fall gibt der Koordinator 13 direkt und unmittelbar das Steuersignal ST an den ersten elektrischen Steueranschluss 33 des Medienkonverters 12 ab.

In einer alternativen, nicht gezeigten Ausführungsform sind weitere Teilnehmer zwischen dem Koordinator 13 und dem ersten Teilnehmer 11 am ersten elektrischen Bus 14 angeordnet.

In einer alternativen, nicht gezeigten Ausführungsform ist mindestens ein additiver Teilnehmer am ersten elektrischen Bus 14 angeordnet, der dem Medienkonverter 12 nachgeordnet ist. Der oder die additiven Teilnehmer sind zwischen dem Medienkonverter 12 und der weitere Abschlussanordnung 27 angeordnet. Der Medienkonverter 12 weist dazu einen zweiten elektrischen Steueranschluss auf, der direkt über eine Steuerleitung an einen ersten elektrischen Steueranschluss des nächsten additiven Teilnehmers angeschlossen ist. Der Medienkonverter 12 ist somit als Verzweiger, Abzweiger oder Verteiler realisiert. Zur Aktivierung des nächsten additiven Teilnehmers kann z.B. der Koordinator 13 über das elektrische Signal S1 einen Befehl an den Medienkonverter 12 geben, über den zweiten elektrischen Steueranschluss des Medienkonverters 12 ein Steuersignal an den ersten elektrischen Steueranschluss des nächsten additiven Teilnehmers abzugeben. Alternativ gibt der Koordinator 13 über das elektrische Signal S1 einen Befehl an den Medienkonverter 12, das interne Steuersignal SI1 über den optischen Bus 15 wie zuvor beschrieben zu übermitteln.

Der Medienkonverter 12 kann auch passiv geschaltet werden, wobei die Einstellung, das interne Steuersignal über den optischen Bus 15 oder den zweiten elektrischen Steueranschluss weiterzugeben, dauerhaft und/oder nichtflüchtig gespeichert wird.

Der Medienkonverter 12 kann z.B. in einer Erstkonfigurationsphase als aktiver Medienkonverter eingestellt sein und anschließend als passiver Medienkonverter eingestellt sein. Der passive Medienkonverter 12 kann frei von einer vom Koordinator 13 zugewiesenen Adresse sein, der aktive Medienkonverter 12 weist eine vom Koordinator 13 zugewiesene Adresse auf.

In einer alternativen, nicht gezeigten Ausführungsform sind zusätzliche Teilnehmer am zweiten elektrischen Bus 16 angeschlossen.

### Bezugszeichenliste

- 10: Busanordnung
- 11: erster Teilnehmer
- 12: Medienkonverter
- 13: Koordinator
- 14: erster elektrischer Bus
- 15: optischer Bus
- 16: zweiter elektrischer Bus
- 17: weiterer Medienkonverter
- 18: weiterer Teilnehmer
- 21: erste elektrische Busleitung
- 22: zweite elektrische Busleitung
- 23: Abschlussanordnung
- 24 bis 26: Widerstand
- 27: weitere Abschlussanordnung
- 28: erste Steuerleitung
- 29: Steuerleitung
- 30: elektrischer Busanschluss
- 31: erste Leitung
- 32: zweite Leitung
- 33: erster elektrischer Steueranschluss
- 34: optischer Busanschluss
- 35: erste optische Leitung
- 36: zweite optische Leitung
- 37: erster optischer Anschluss
- 38: zweiter optischer Anschluss
- 39: Kontrolleinheit
- 40: optischer Busanschluss
- 41: elektrischer Busanschluss
- 42,43: Abschlussanordnung
- 44: dritte elektrische Busleitung
- 45: vierte elektrische Busleitung
- 46: elektrischer Busanschluss
- 47: weitere Steuerleitung
- 48: Kontrolleinheit
- 50: optische Steuerleitung
- PB1, PB2: Datenübertragungsphase
- PI: Ruhephase
- PI*: Vorphase
- PS1, PS2: Synchronisationsphase
- PU: undefinierter Zustand
- SI1: internes Steuersignal
- SI2: Steuereingangssignal
- SO, SO2: optisches Signal
- ST, ST1, ST3: Steuersignal
- STO: optisches Steuersignal
- S1: elektrisches Signal
- S2: weiteres elektrisches Signal
- t: Zeit
- t0, t1, t2: Zeitpunkt
- T1 bis T5: Zeitdauer
- W1: erster Wert
- W2: zweiter Wert

## Patentansprüche

1. Medienkonverter, umfassend
- einen elektrischen Busanschluss (30) zum Anschließen eines ersten elektrischen Busses (14) und
- einen optischen Busanschluss (34) zum Anschließen eines optischen Busses (15), wobei der Medienkonverter (12) ausgelegt ist, ein elektrisches Signal (S1) des ersten elektrischen Busses (14) derart in ein optisches Signal (SO) des optischen Busses (15) zu übertragen, dass bei einem ersten Wert (W1) eines internen Steuersignals (SI1) des Medienkonverters (12) das optische Signal (SO) dem elektrischen Signal (S1) entspricht und bei einem zweiten Wert (W2) des internen Steuersignals (SI1) das optische Signal (SO) eine dem elektrischen Signal (S1) entsprechende invertierte Form aufweist, **dadurch gekennzeichnet, dass** der Medienkonverter (12) ausgelegt ist, in einer Sendephase (PS1, PB1), während der sich das interne Steuersignal (SI1) vom ersten Wert (W1) zum zweiten Wert (W2) ändert, das optische Signal (SO) so abzugeben, dass das optische Signal (SO) bis zum Ende der Sendephase (PS1, PB1) dem elektrischen Signal (S1) entspricht.

2. Medienkonverter nach Anspruch 1,
wobei der Medienkonverter (12) ausgelegt ist, nach einer Änderung des internen Steuersignals (SI1) vom ersten Wert (W1) zum zweiten Wert (W2) einen Wert des optischen Signals (SO) in einer Ruhephase (PI) zu ändern und in einer auf die Ruhephase (PI) folgenden weiteren Sendephase (PS2, PB2) das optische Signal (SO) gegenüber dem elektrischen Signal (S1) in invertierter Form auszugeben.

3. Medienkonverter nach Anspruch 1 oder 2,
wobei der elektrische Busanschluss (30) des Medienkonverters (12) zwei elektrische Leitungen (31, 32) aufweist, die an zwei elektrische Busleitungen (21, 22) des ersten elektrischen Busses (14) angeschlossen sind.

4. Medienkonverter nach einem der Ansprüche 1 bis 3,
wobei der optische Busanschluss (34) des Medienkonverters (12) zwei optische Anschlüsse (37, 38) aufweist, die an zwei optische Leitungen (35, 36) des optischen Busses (15) angeschlossen sind.

5. Medienkonverter nach einem der Ansprüche 1 bis 4,
wobei der Medienkonverter (12) einen ersten elektrischen Steueranschluss (33) umfasst und
wobei der Medienkonverter (12) ausgelegt ist, ein Steuersignal (ST) am ersten elektrischen Steueranschluss (33) abzugreifen und das interne Steuersignal (SI1) aus dem Steuersignal (ST) zu generieren und/oder das interne Steuersignal (SI1) als Funktion des elektrischen Signals (S1) des ersten elektrischen Busses (14) zu generieren.

6. Busanordnung (10), umfassend
- den Medienkonverter (12) nach einem der Ansprüche 1 bis 5,
- den optischen Bus (15) und
- einen weiteren Medienkonverter (17),
wobei der weitere Medienkonverter (17) einen elektrischen Busanschluss (41) zum Anschließen eines zweiten elektrischen Busses (16) und einen optischen Busanschluss (40) zum Anschließen des optischen Busses (15) umfasst und
wobei der weitere Medienkonverter (12) ausgelegt ist, das optische Signal (SO) des optischen Busses (15) in ein weiteres elektrisches Signal (S2) des zweiten elektrischen Busses (16) zu übertragen.

7. Busanordnung nach Anspruch 6,
wobei der weitere Medienkonverter (17) ausgelegt ist,
- zu erkennen, ob er das optische Signal (SO) in invertierter Form empfängt, und
- den Wert eines Steuereingangssignals (SI2) von einem ersten Wert (W1) in einen zweiten Wert (W2) zu ändern im Fall, dass der weitere Medienkonverter (17) erkannt hat, dass er das optische Signal (SO) in invertierter Form empfängt.

8. Busanordnung nach Anspruch 6 oder 7,
wobei der weitere Medienkonverter (17) ausgelegt ist,
- zu erkennen, ob er das optische Signal (SO) in invertierter Form empfängt, und
- das weitere elektrische Signal (S2) derart an den zweiten elektrischen Bus (16) abzugeben, dass das weitere elektrische Signal (S2) gegenüber dem optischen Signal (SO) invertiert wird im Fall, dass der weitere Medienkonverter (17) erkannt hat, dass er das optische Signal (SO) in invertierter Form empfängt.

9. Busanordnung nach einem der Ansprüche 6 bis 8,
wobei der Medienkonverter (12), der weitere Medienkonverter (17) und der optische Bus (15) zur bidirektionalen optischen Datenübertragung ausgelegt sind.

10. Busanordnung nach einem der Ansprüche 6 bis 9, umfassend einen Koordinator (13), der über den ersten elektrischen Bus (14) mit dem elektrischen Busanschluss (30) des Medienkonverters (12) gekoppelt ist.

11. Busanordnung nach Anspruch 10, umfassend einen ersten Teilnehmer (11), der über den ersten elektrischen Bus (14) mit dem Koordinator (13) gekoppelt ist und einen zweiten elektrischen Steueranschluss umfasst, der direkt an den ersten elektrischen Steueranschluss (33) des Medienkonverters (12) angeschlossen ist.

12. Busanordnung nach einem der Ansprüche 6 bis 11, umfassend einen weiteren Teilnehmer (18), der über den zweiten elektrischen Bus (16) mit dem weiteren Medienkonverter (17) gekoppelt ist.

13. Verfahren zum Betreiben eines Medienkonverters, umfassend folgende Schritte:
- Erzeugen eines internen Steuersignals (SI1) durch den Medienkonverter (12),
- Empfangen eines elektrischen Signals (S1) durch den Medienkonverter (12) von einem ersten elektrischen Bus (14) und
- Abgeben einen optischen Signals (SO) durch den Medienkonverter (12) an einen optischen Bus (15),
wobei der Medienkonverter (12) das optische Signal (SO) derart abgibt, dass bei einem ersten Wert (W1) des internen Steuersignals (SI1) das optische Signal (SO) dem elektrischen Signal (S1) entspricht und bei einem zweiten Wert (W2) des internen Steuersignals (SI1) das optische Signal (SO) eine dem elektrischen Signal (S1) entsprechende invertierte Form aufweist, **dadurch gekennzeichnet, dass** der Medienkonverter (12) in einer Sendephase (PS1, PB1), während der sich das interne Steuersignal (SI1) vom ersten Wert (W1) zum zweiten Wert (W2) ändert, das optische Signal (SO) so abgibt, dass das optische Signal (SO) bis zum Ende der Sendephase (PS1, PB1) dem elektrischen Signal (S1) entspricht.

## Claims

1. Media converter, comprising
- an electrical bus port (30) for connecting a first electrical bus (14) and
- an optical bus port (34) for connecting an optical bus (15), the media converter (12) being designed to convert an electrical signal (S1) of the first electrical bus (14) into an optical signal (SO) of the optical bus (15) in such a way that, for a first value (W1) of an internal control signal (SI1) of the media converter (12), the optical signal (SO) corresponds to the electrical signal (S1) and, for a second value (W2) of the internal control signal (SI1), the optical signal (SO) has an inverted shape corresponding to the electrical signal (S1),
**characterized in that**
in a transmission phase (PS1, PB1) during which the internal control signal (SI1) changes from the first value (W1) to the second value (W2), the media converter (12) is designed to emit the optical signal (SO) in such a way that the optical signal (SO) corresponds to the electrical signal (S1) until the end of the transmission phase (PS1, PB1).

2. Media converter according to claim 1,
wherein the media converter (12) is designed, after a change of the internal control signal (SI1) from the first value (W1) to the second value (W2), to change a value of the optical signal (SO) in a rest phase (PI), and in a further transmission phase (PS2, PB2) following the rest phase (PI) to output the optical signal (SO) in inverted form with respect to the electrical signal (S1).

3. Media converter according to either claim 1 or claim 2,
wherein the electrical bus port (30) of the media converter (12) has two electrical lines (31, 32) which are connected to two electrical bus lines (21, 22) of the first electrical bus (14).

4. Media converter according to any of claims 1 to 3,
wherein the optical bus port (34) of the media converter (12) has two optical terminals (37, 38) which are connected to two optical lines (35, 36) of the optical bus (15).

5. Media converter according to any of claims 1 to 4,
wherein the media converter (12) comprises a first electrical control terminal (33) and
wherein the media converter (12) is designed to tap a control signal (ST) at the first electrical control terminal (33) and to generate the internal control signal (SI1) from the control signal (ST) and/or to generate the internal control signal (SI1) on the basis of the electrical signal (S1) of the first electrical bus (14).

6. Bus arrangement (10), comprising
- the media converter (12) according to any of claims 1 to 5,
- the optical bus (15) and
- a further media converter (17),
wherein the further media converter (17) comprises an electrical bus port (41) for connecting a second electrical bus (16) and an optical bus port (40) for connecting the optical bus (15) and
wherein the further media converter (12) is designed to convert the optical signal (SO) of the optical bus (15) into a further electrical signal (S2) of the second electrical bus (16).

7. Bus arrangement according to claim 6,
wherein the further media converter (17) is designed
- to detect whether it receives the optical signal (SO) in inverted form, and
- to change the value of a control input signal (S12) from a first value (W1) to a second value (W2) in the event that the further media converter (17) has detected that it is receiving the optical signal (SO) in inverted form.

8. Bus arrangement according to either claim 6 or claim 7,
wherein the further media converter (17) is designed
- to detect whether it receives the optical signal (SO) in inverted form, and
- to output the further electrical signal (S2) to the second electrical bus (16) in such a way that the further electrical signal (S2) is inverted with respect to the optical signal (SO) in the event that the further media converter (17) has detected that it is receiving the optical signal (SO) in inverted form.

9. Bus arrangement according to any of claims 6 to 8,
wherein the media converter (12), the further media converter (17) and the optical bus (15) are designed for bidirectional optical data transmission.

10. Bus arrangement according to any of claims 6 to 9, comprising a coordinator (13) which is coupled to the electrical bus port (30) of the media converter (12) via the first electrical bus (14).

11. Bus arrangement according to claim 10, comprising a first station (11) which is coupled to the coordinator (13) via the first electrical bus (14) and comprises a second electrical control terminal which is directly connected to the first electrical control terminal (33) of the media converter (12).

12. Bus arrangement according to any of claims 6 to 11, comprising a further station (18) which is coupled to the further media converter (17) via the second electrical bus (16).

13. Method for operating a media converter, comprising the following steps:
- the media converter (12) generating an internal control signal (SI1),
- the media converter (12) receiving an electrical signal (S1) from a first electrical bus (14) and
- the media converter (12) emitting an optical signal (SO) to an optical bus (15),
the media converter (12) emitting the optical signal (SO) in such a way that, for a first value (W1) of the internal control signal (SI1), the optical signal (SO) corresponds to the electrical signal (S1), and, for a second value (W2) of the internal control signal (SI1), the optical signal (SO) has an inverted shape corresponding to the electrical signal (S1),
**characterized in that**
in a transmission phase (PS1, PB1) during which the internal control signal (SI1) changes from the first value (W1) to the second value (W2), the media converter (12) emits the optical signal (SO) in such a way that the optical signal (SO) corresponds to the electrical signal (S1) until the end of the transmission phase (PS1, PB1).

## Revendications

1. Convertisseur de média, comprenant
- un raccord de bus électrique (30) pour le raccordement d'un premier bus électrique (14) et
- un raccord de bus optique (34) pour le raccordement d'un bus optique (15), dans lequel le convertisseur de média (12) est conçu pour transmettre un signal électrique (S1) du premier bus électrique (14) dans un signal optique (SO) du bus optique (15) de telle sorte que le signal optique (SO) corresponde au signal électrique (S1) pour une première valeur (W1) d'un signal de commande interne (SI1) du convertisseur de média (12) et que le signal optique (SO) présente une forme inversée correspondant au signal électrique (S1) pour une seconde valeur (W2) du signal de commande interne (SI1),
**caractérisé en ce que,**
dans une phase d'envoi (PS1, PB1) pendant laquelle le signal de commande interne (SI1) passe de la première valeur (W1) à la seconde valeur (W2), le convertisseur de média (12) est conçu pour émettre le signal optique (SO) de telle sorte que le signal optique (SO) corresponde au signal électrique (S1) jusqu'à la fin de la phase d'envoi (PS1, PB1).

2. Convertisseur de média selon la revendication 1,
dans lequel le convertisseur de média (12) est conçu, après une modification du signal de commande interne (SI1) de la première valeur (W1) à la seconde valeur (W2), pour modifier une valeur du signal optique (SO) dans une phase de repos (PI), et pour délivrer le signal optique (SO) sous forme inversée par rapport au signal électrique (S1) dans une phase d'envoi supplémentaire (PS2, PB2) qui suit la phase de repos (PI).

3. Convertisseur de média selon la revendication 1 ou 2,
dans lequel le raccord de bus électrique (30) du convertisseur de média (12) présente deux lignes électriques (31, 32) qui sont connectées à deux lignes de bus électriques (21, 22) du premier bus électrique (14).

4. Convertisseur de média selon l'une des revendications 1 à 3,
dans lequel le raccord de bus optique (34) du convertisseur de média (12) présente deux raccords optiques (37, 38) qui sont connectés à deux lignes optiques (35, 36) du bus optique (15).

5. Convertisseur de média selon l'une des revendications 1 à 4,
dans lequel le convertisseur de média (12) comprend un premier raccord de commande électrique (33) et
dans lequel le convertisseur de média (12) est conçu pour intercepter un signal de commande (ST) au niveau du premier raccord de commande électrique (33) et pour générer le signal de commande interne (SI1) à partir du signal de commande (ST) et/ou pour générer le signal de commande interne (SI1) en fonction du signal électrique (S1) du premier bus électrique (14).

6. Moyen formant bus (10), comprenant
- le convertisseur de média (12) selon l'une des revendications 1 à 5,
- le bus optique (15) et
- un convertisseur de média supplémentaire (17),
dans lequel le convertisseur de média supplémentaire (17) comprend un raccord de bus électrique (41) pour le raccordement d'un second bus électrique (16) et un raccord de bus optique (40) pour le raccordement du bus optique (15) et
dans lequel le convertisseur de média supplémentaire (12) est conçu pour transmettre le signal optique (SO) du bus optique (15) dans un signal électrique supplémentaire (S2) du second bus électrique (16).

7. Moyen formant bus selon la revendication 6,
dans lequel le convertisseur de média supplémentaire (17) est conçu
- pour reconnaître s'il reçoit le signal optique (SO) sous forme inversée, et
- pour modifier la valeur d'un signal d'entrée de commande (S12) d'une première valeur (W1) à une seconde valeur (W2) dans le cas où le convertisseur de média supplémentaire (17) a reconnu la réception du signal optique (SO) sous forme inversée.

8. Moyen formant bus selon la revendication 6 ou 7,
dans lequel le convertisseur de média supplémentaire (17) est conçu
- pour reconnaître s'il reçoit le signal optique (SO) sous forme inversée, et
- pour émettre le signal électrique supplémentaire (S2) au second bus électrique (16) de telle sorte que le signal électrique supplémentaire (S2) soit inversé par rapport au signal optique (SO) dans le cas où le convertisseur de média supplémentaire (17) a reconnu la réception du signal optique (SO) sous forme inversée.

9. Moyen formant bus selon l'une des revendications 6 à 8,
dans lequel le convertisseur de média (12), le convertisseur de média supplémentaire (17) et le bus optique (15) sont conçus pour la transmission bidirectionnelle de données par voie optique.

10. Moyen formant bus selon l'une des revendications 6 à 9, comprenant un coordinateur (13) couplé au raccord de bus électrique (30) du convertisseur de média (12) par l'intermédiaire du premier bus électrique (14).

11. Moyen formant bus selon la revendication 10, comprenant un premier utilisateur (11) qui est couplé au coordinateur (13) par l'intermédiaire du premier bus électrique (14) et comprend un second raccord de commande électrique connecté directement au premier raccord de commande électrique (33) du convertisseur de média (12).

12. Moyen formant bus selon l'une des revendications 6 à 11, comprenant un utilisateur supplémentaire (18) couplé au convertisseur de média supplémentaire (17) par l'intermédiaire du second bus électrique (16).

13. Procédé pour faire fonctionner un convertisseur de média, comprenant les étapes suivantes :
- génération d'un signal de commande interne (SI1) par le convertisseur de média (12),
- réception, par le convertisseur de média (12), d'un signal électrique (S1) provenant d'un premier bus électrique (14) et
- émission, par le convertisseur de média (12), d'un signal optique (SO) à un bus optique (15),
dans lequel le convertisseur de média (12) émet le signal optique (SO) de telle sorte que, pour une première valeur (W1) du signal de commande interne (SI1), le signal optique (SO) corresponde au signal électrique (S1) et, pour une seconde valeur (W2) du signal de commande interne (SI1), le signal optique (SO) présente une forme inversée correspondant au signal électrique (S1),
**caractérisé en ce que,**
dans une phase d'envoi (PS1, PB1) pendant laquelle le signal de commande interne (SI1) passe de la première valeur (W1) à la seconde valeur (W2), le convertisseur de média (12) émet le signal optique (SO) de telle sorte que le signal optique (SO) corresponde au signal électrique (S1) jusqu'à la fin de la phase d'envoi (PS1, PB1).
